# EUROPEAN PATENT APPLICATION

(11) **EP 4 708 161 A1**
(43) Date of publication of application: **11.03.2026**
(21) Application number: 25206179.1
(22) Date of filing: 23.04.2024
(51) Int. Cl.: G06Q 10/04, G06Q 30/0242, G06Q 30/0201, G06Q 30/0202

(54) **FORECASTING METHODS AND SYSTEMS**

(30) Priority: 26.09.2023 GB 202314715; 27.11.2023 GB 202318088
(62) Divisional of application: 25162173.6
(71) Applicant: Skyscanner Technology Limited, London W1D 4AL (GB)
(72) Inventor: RUSSO, Chris, Edinburgh, EH3 9EN (GB); GOMEZ, Jordi, Edinburgh, EH3 9EN (GB); ROMERO, Carlos, Edinburgh, EH3 9EN (GB); LOZANO, Albert, Edinburgh, EH3 9EN (GB); LE NAGARD, Ronan, Edinburgh, EH3 9EN (GB); BECKER, Michelle, Edinburgh, EH3 9EN (GB)
(74) Representative: Langley, Peter James

(57) **Abstract**

There is disclosed a computer-implemented method of serving an advertisements campaign, the method including the steps of:
(i) a platform which programmatically authors, schedules and monitors workflows, receiving data by extraction and transformation from an Events database, the platform including an advertisements inventory, and an advertisements Forecasting Inventory directed acyclic graph (DAG);
(ii) evaluating and storing advertising indexes in a data & report engine, the advertising indexes including data ingested from the advertisements Forecasting Inventory DAG in the platform;
(iii) a data streaming platform receiving pushed forecast events from an advertisements forecasting service;
(iv) populating the Events database from the data streaming platform;
(v) a portal requesting an advertisements forecast from the advertisements forecasting service;
(vi) the advertisements forecasting service querying inventory, by querying the advertising indexes stored in the data & report engine;
(vii) the forecasting service using the response to querying inventory to provide an advertisements forecast to the portal;
(viii) the portal processing the received advertisements forecast to determine an advertisements campaign;
(ix) the portal writing the determined advertisements campaign to a datalayer;
(x) the datalayer dumping the determined advertisements campaign to a web service interface; and
(xi) the web service interface using the dumped determined advertisements campaign to get campaign content from the platform, including from the advertisements inventory, to serve an advertisements campaign. Related methods and systems are disclosed.

## Description

### BACKGROUND OF THE INVENTION

### 1. Field of the Invention

The field of the invention relates to forecasting methods and systems, especially for web based content, and more especially for web based advertising campaigns.

### 2. Technical Background

Previous forecasting methods and systems, especially for web based advertising campaigns, have suffered from inaccuracy. There is a need for improved forecasting methods and systems, especially for web based advertising campaigns. This can improve the energy efficiency of the internet.

### 3. Discussion of Related Art

US2016253709A1 discloses techniques for forecasting for an advertisement campaign. A personalized communication system can receive a request for an advertisement campaign on a social network. The request can have a member attribute and a time frame. The personalized communication system can access member data and behavior data from the social network. Additionally, the personalized communication system can determine a target group based on the member data and the member attribute. Furthermore, the personalized communication system can calculate a number of unique visitors to the social network from the target group based on the member attribute, the time frame, and a frequency cap. Subsequently, the personalized communication system can forecast a number of messages for the first advertisement campaign based on the calculated number of unique visitors, the behavior data, and the time frame.

EP1061710 (A2) and EP1061710 (B1) disclose a system providing access to web objects that matches predicted demand for web objects to available capacity on web servers. The system implements methods to dynamically shape both demand and capacity based on certain criteria. The system provides methods to dynamically shape demand for an object based on criteria such as arrival time, incoming geography, and costs requirements. In particular, it is disclosed to characterize future demand for an object based on aggregation and forecasting of past demand for such object.

Parssinen et al, Environmental Impact Assessment Review, Volume 73, November 2018, Pages 177-200, have concluded that in 2016, online advertising consumed 20-282 TWh of energy; that the Internet consumes vast amounts of energy and creates CO2 emissions of global significance; that reducing online advertising traffic will improve the energy efficiency of the Internet, and that the impact of invalid online advertising consumes lots of energy and has a hefty carbon footprint.

### SUMMARY OF THE INVENTION

According to a first aspect of the invention, there is provided a computer-implemented method of forecasting a number of clicks and a number of impressions a line item will receive in a defined time period, the method including the steps of:
(i) a forecasting service receiving a request from a portal for a forecast of the number of clicks and the number of impressions a line item will receive in a defined time period, the request including targeting criteria and placement data;
(ii) the forecasting service translating the targeting criteria and the placement data into an index querying syntax;
(iii) the forecasting service using the index querying syntax to request inventory via a service;
(iv) the service making a request corresponding to the index querying syntax for a time series of historical searches to a database system;
(v) in response to the request, the service receiving the time series of historical searches from the database system;
(vi) the service providing inventory to the forecasting service corresponding to the defined time period, based on the received time series of historical searches;
(vii) the forecasting service using the returned inventory in a request to a real-time service which makes a forecast of the number of clicks and the number of impressions the line item will receive in the defined time period, in which the forecasting service receives the response from the real-time service in real time, e.g. in less than one second;
(viii) the forecasting service using the received forecast of the number of clicks and the number of impressions the line item will receive in the defined time period, to derive a click-through-rate (CTR) for the line item;
(ix) the forecasting service returning the forecast of the number of clicks and the number of impressions the line item will receive in the defined time period, and the click-through-rate (CTR) in the defined time period, to the portal.

An advantage is that forecasting accuracy is improved: this has the advantage that fewer impressions of a line item are required to offset poorer forecasting accuracy, which reduces the energy used in transmitting and receiving the impressions, and which reduces the bandwidth required to transmit the impressions. An advantage is that the forecasting service receives the response from the real-time service in real time, which is an improvement in the speed of forecasting: an advantage is that the (e.g. sponsored) portal may write an ad campaign with forecasting to a (e.g. sponsored) datalayer more quickly.

The method may be one wherein the historical searches relate to flights, to hotel reservations, or to car rentals.

The method may be one wherein the time series of historical searches is a time series of historical searches at predefined intervals.

The method may be one wherein the time series of historical searches is a daily time series of historical searches.

The method may be one wherein the forecasting service is implemented as, or includes, a AWS Lambda function. Advantages include those stated above for the first aspect of the invention.

The method may be one including creating a projection of inventory by training and querying a machine learning (ML) model in real time. Advantages include those stated above for the first aspect of the invention.

The method may be one including receiving the search targeting criteria of a line item as input.

The method may be one wherein the forecast of the number of clicks and the number of impressions the line item will receive in the defined time period includes a forecasted time series.

The method may be one wherein the forecasting service sends an event including the forecasted time-series, so then the event may be used for an accuracy report.

The method may be one wherein the service makes a request to a database system that allows fast queries on very large datasets, e.g. a Apache Druid database system.

The method may be one wherein the database system queries at least 100,000 rows of data, or at least 1 million rows of data, or at least 10 million rows of data, or at least 100 million rows of data. Advantages include those stated above for the first aspect of the invention. An advantage is that very large datasets can be queried in real time. The method may be one wherein the real-time service which makes a forecast of the number of clicks and the number of impressions the line item will receive in the defined time period is, or includes, prophet by Facebook. Advantages include those stated above for the first aspect of the invention. An advantage is that very large datasets can be queried in real time.

The method may be one wherein prophet by Facebook provides an interface to a machine learning model that can be trained and which, when trained, can predict impressions in less than one second. Advantages include those stated above for the first aspect of the invention. An advantage is that very large datasets can be queried in real time.

The method may be one wherein the line item is an advertisement or a news item.

The method may be one wherein resources consumption are monitored, and an operation alert (e.g. warning message) is generated if the resources consumption reaches a predefined threshold. An advantage is more reliable provision of forecasting. The method may be one wherein additional resources are automatically requested, in response to when the operation alert is generated. An advantage is more reliable provision of forecasting.

The method may be one wherein additional resources are automatically provided, in response to when the operation alert is generated. An advantage is more reliable provision of forecasting.

The method may be one wherein resources consumption includes memory usage, or central processing unit (CPU) usage.

The method may be one wherein an operation alert (e.g. warning message) is generated when the forecast service returns an error response. An advantage is more reliable provision of forecasting.

The method may be one wherein an operation alert (e.g. warning message) is generated when the forecast service is unavailable. An advantage is more reliable provision of forecasting.

According to a second aspect of the invention, there is provided a system configured to perform a method of any aspect of the first aspect of the invention.

According to a third aspect of the invention, there is provided a computer-implemented method of building an advertisements forecast inventory dataset and ingesting the advertisements forecast inventory dataset in a real-time analytics database cluster, the method including the steps of:
(i) an advertisements (e.g. flight) search events builder executing a builder job in a advertisements Reports directed acyclic graph (DAG) to build an advertisements (e.g. flight) search events dataset, until the builder job is complete;
(ii) an advertisements (e.g. flight) search events sensor in an advertisements Inventory DAG waiting for the builder job to complete;
(iii) an advertisements forecast inventory builder in the advertisements Inventory DAG building a forecast inventory dataset and saving the forecast inventory dataset in a format in a container for objects e.g. forecast bucket;
(iv) an advertisements forecast inventory sensor in an advertisements forecast inventory DAG waiting for the advertisements forecast inventory builder in the advertisements Inventory DAG to finish;
(v) in the advertisements forecast inventory DAG, an operator of a real-time analytics database that delivers real-time (e.g. sub-one second) answers to queries on streaming and batch data, e.g. Apache Druid, taking the inventory dataset saved in the (e.g. Apache parquet) format in the container for objects e.g. forecast bucket and ingesting the inventory dataset saved in the (e.g. Apache parquet) format, including indexing, in a real-time analytics database cluster that delivers real-time (e.g. sub-one second) answers to queries on streaming and batch data, e.g. in an Apache Druid cluster.

An advantage is that forecasting accuracy may be improved: this has the advantage that fewer impressions of a line item are required to offset poorer forecasting accuracy, which reduces the energy used in transmitting and receiving the impressions, and which reduces the bandwidth required to transmit the impressions. An advantage is that a forecasting service may receive the response from the real-time analytics database cluster in real time, which is an improvement in the speed of forecasting: an advantage is that a (e.g. sponsored) portal may write an ad campaign with forecasting to a (e.g. sponsored) datalayer more quickly.

The method may be one including a method of any aspect of the first aspect of the invention.

The method may be one in which the advertisements search events builder is, or includes, an advertisements flight search events builder, or an advertisements hotels search events builder, or an advertisements car rental search events builder.

The method may be one in which the real-time analytics database cluster queries at least 100,000 rows of data, or at least 1 million rows of data, or at least 10 million rows of data, or at least 100 million rows of data. Advantages include those stated above for the third aspect of the invention. An advantage is that very large datasets can be queried in real time.

The method may be one in which the advertisements forecast inventory builder is an analytics engine for large-scale data processing (e.g. Apache Spark) application job. The method may be one in which the container for objects is a forecast bucket.

The method may be one in which the forecast bucket is a S3 bucket.

The method may be one in which the advertisements Forecasting Inventory (e.g. Apache Druid) DAG: runs the jobs to extract the data from the different events to build the daily forecasting inventory dataset to be ingested in indexes of a real-time analytics database that delivers real-time (e.g. sub-one second) answers to queries on streaming and batch data, e.g. at large scale and under large loads, e.g. Apache Druid, for later queries. Advantages include those stated above for the third aspect of the invention. An advantage is that very large datasets can be queried in real time.

The method may be one in which the inventory dataset is for webpage-presented products.

The method may be one in which the advertisements (e.g. flight) search events dataset is extracted from a pricing service, e.g. FPS, table.

According to a fourth aspect of the invention, there is provided a system configured to perform a method of any aspect of the third aspect of the invention.

According to a fifth aspect of the invention, there is provided a computer-implemented method of building and saving an advertisements forecasting accuracy report, the method including the steps of:
(i) exporting an advertisements line items forecasts history to a datalayer;
(ii) dumping line items forecasts from the datalayer, via a webservice interface, into an advertisements line items forecast builder in an advertisements Forecasting Accuracy directed acyclic graph (DAG), and building an advertisements line items forecast;
(iii) an analytics engine for large-scale data processing (e.g. Apache Spark) in an advertisements Reports DAG receiving targeting criteria of active advertisements line items;
(iv) the analytics engine for large-scale data processing (e.g. Apache Spark) in the advertisements Reports DAG executing a job to build a report of the advertisements line items performance, corresponding to a defined time period, of a number of search hits given the targeting criteria of the active advertisements line items;
(v) a sensor in the advertisements Forecasting Accuracy DAG waiting for the advertisements line items performance report builder in the advertisements Reports DAG to finish;
(vi) an analytics engine for large-scale data processing (e.g. Apache Spark) executing a job in the advertisements Forecasting Accuracy DAG using the report of the advertisements line items performance, the advertisements line items forecast, and the number of search hits given the targeting criteria of the active advertisements line items, to build the advertisements forecasting accuracy report and to save the advertisements forecasting accuracy report.

An advantage is that forecasting accuracy may be improved: this has the advantage that fewer impressions of a line item are required to offset poorer forecasting accuracy, which reduces the energy used in transmitting and receiving the impressions, and which reduces the bandwidth required to transmit the impressions.

The method may be one including a method of any aspect of the first or third aspects of the invention.

The method may be one wherein the webservice interface is, or includes, a S3 interface.

The method may be one wherein the advertisements forecasting accuracy report is saved in a trusted table.

The method may be one wherein the defined time period is one day.

The method may be one wherein the advertisements forecasting accuracy report is built and saved over an associated time period.

The method may be one wherein the associated time period is one day.

The method may be one wherein the advertisements Forecasting Accuracy DAG runs the jobs to extract the ads line items forecasted values and actual performance metrics to create the forecasting accuracy report.

The method may be one wherein the forecasting accuracy report includes a measurement of advertisement forecasting accuracy of a line item using the percentage error between the forecast value of the number of search hits given the targeting criteria and the actual value of the number of search hits e.g. for that day. The method may be one wherein for an initial release, both a previous method and the present method are used to generate respective forecasts, however the results of the present method might not be returned to the user at this stage, we call this shadow mode; the results from the present method are logged with an event and added to the forecast accuracy (e.g. ads_line_item_daily_forecast_accuracy) table; for some time there are stored two sets of forecasts for each line item: one for the previous method and one for the present method, to enable to make a direct comparison between the two forecasts.

The method may be one wherein the previous method in shadow mode is only called once the line item is ready to be saved.

According to a sixth aspect of the invention, there is provided a system configured to perform a method of any aspect of the fifth aspect of the invention.

According to a seventh aspect of the invention, there is provided a computer-implemented method of serving an advertisements campaign, the method including the steps of:
(i) a platform which programmatically authors, schedules and monitors workflows, receiving data by extraction and transformation from an Events database, the platform including an advertisements inventory, and an advertisements Forecasting Inventory directed acyclic graph (DAG);
(ii) evaluating and storing advertising indexes in a data & report engine, the advertising indexes including data ingested from the advertisements Forecasting Inventory DAG in the platform;
(iii) a data streaming platform receiving pushed forecast events from an advertisements forecasting service;
(iv) populating the Events database from the data streaming platform;
(v) a portal requesting an advertisements forecast from the advertisements forecasting service;
(vi) the advertisements forecasting service querying inventory, by querying the advertising indexes stored in the data & report engine;
(vii) the forecasting service using the response to querying inventory to provide an advertisements forecast to the portal;
(viii) the portal processing the received advertisements forecast to determine an advertisements campaign;
(ix) the portal writing the determined advertisements campaign to a datalayer;
(x) the datalayer dumping the determined advertisements campaign to a web service interface; and
(xi) the web service interface using the dumped determined advertisements campaign to get campaign content from the platform, including from the advertisements inventory, to serve an advertisements campaign.

An advantage is that forecasting accuracy is improved: this has the advantage that fewer impressions of a line item in an advertisements campaign are required to offset poorer forecasting accuracy, which reduces the energy used in transmitting and receiving the impressions, and which reduces the bandwidth required to transmit the impressions. An advantage is that the forecasting service may receive the response to querying inventory in real time, which is an improvement in the speed of forecasting: an advantage is that the (e.g. sponsored) portal may write an ad campaign with forecasting to a (e.g. sponsored) datalayer more quickly. An advantage is an improved advertisements campaign.

The method may be one including a method of any aspect of the first, third or fifth aspects of the invention.

The method may be one wherein the platform which programmatically authors, schedules and monitors workflows is, or includes, Apache Airflow.

The method may be one wherein the advertisements are for one or more of: computing devices which use iOS, computing devices which use Android, desktop computing devices, and computing devices which use the mobile web.

The method may be one wherein the advertisements are for one or more of: a smartphone, a tablet computer, a laptop computer, a desktop computer, a smart TV. The method may be one wherein the data & report engine includes an ETL and an Events database.

The method may be one wherein the ETL includes an Ads Inventory DAG and an Ads Forecasting Accuracy DAG.

The method may be one wherein the ETL receives data by extraction and transformation from the Events database.

The method may be one wherein the Events database includes one or more, or all, of: AdResponse, PricingSessionStarted, Ad Impression, Ad View, Ad Click and Ad Forecast data.

The method may be one wherein the advertising indexes include one or more, or all, of data relating to: placement, tagging, user ID, Impression {0,1}, View {0,1}, and Click {0,1}.

The method may be one wherein the forecasting service receives the response in less than one second from the querying inventory. An advantage is that the forecasting service receives the response to querying inventory in real time, which is an improvement in the speed of forecasting: an advantage is that the (e.g. sponsored) portal may write an ad campaign with forecasting to a (e.g. sponsored) datalayer more quickly. An advantage is an improved advertisements campaign.

The method may be one wherein the web service interface is, or includes, an S3 web service interface.

The method may be one wherein the forecasting service pushes the forecast events to the internal data streaming platform and on to the events database.

The method may be one wherein the forecast events are used to compare the forecast with measured advertising performance data, to evaluate the forecasting performance, and to use the measured forecasting performance to modify future forecasting, to improve the accuracy of the forecasting. An advantage is that forecasting accuracy is improved: this has the advantage that fewer impressions of a line item in an advertisements campaign are required to offset poorer forecasting accuracy, which reduces the energy used in transmitting and receiving the impressions, and which reduces the bandwidth required to transmit the impressions.

The method may be one wherein the advertisements forecasting service is implemented in, or includes, AWS Lambda.

The method may be one wherein the advertisements Forecasting Inventory DAG is implemented in, or includes, Apache Druid.

The method may be one wherein the advertisements inventory data includes data extracted from a table including events logged by a Delivery Service when the Delivery Service receives a request from a frontend; placements that were requested in the Delivery Service and the (e.g flight) pricing service (FPS) session id related to the request are extracted; the latter is then used to make a join with the (e.g. Flight)SearchPricing table to extract the search criteria parameters.

The method may be one wherein the advertisements inventory data includes data extracted from a table including the (e.g flight) searches made for specific web pages; the table contains (e.g. all) the data related to the search targeting criteria, and also the suppliers that were pinged for an itinerary for the (e.g flight) search; the table is used to extract the targeting search criteria related to an event in the table including events logged by a Delivery Service when the Delivery Service receives a request from a frontend (e.g. Searched Routes Count), and to get (e.g. all) the suppliers with an itinerary for a targeting criteria (e.g. Supplier Searched Route).

The method may be one wherein the advertisements inventory data includes data extracted from a table including ads events (e.g. impressions, clicks, views), unified in a single entry, joined with the search data (e.g. through FPS table) related to the request made to the Delivery Service.

The method may be one wherein the advertisements inventory data includes data extracted from a table including geo-location information.

The method may be one wherein the advertisements inventory data is saved in a container for objects e.g. forecasting bucket, e.g. S3 bucket e.g. in Apache parquet format.

The method may be one wherein the advertisements inventory data saved in the container for objects is consumed by an Apache Airflow Druid operator and then ingested in an Apache Druid cluster.

The method may be one wherein the platform reports a task failure in the DAGs in a communication channel using a reporting application.

The method may be one wherein the platform reports any task failure in the DAGs in a communication channel using a reporting application.

According to an eighth aspect of the invention, there is provided a system configured to perform a method of any aspect of the seventh aspect of the invention.

Aspects of the invention may be combined.

### BRIEF DESCRIPTION OF THE FIGURES

Aspects of the invention will now be described, by way of example(s), with reference to the following Figures, in which:
**Figure 1** shows an example of a Forecasting Architecture.
**Figure 2** shows an example of Extract, Transform, Load processes.
**Figure 3** shows an example of interaction between a forecasting service, and a sponsored portal, and a database system that allows fast queries on very large datasets, e.g. Apache Druid.

### DETAILED DESCRIPTION

Our goals include:
- To have a reliable Ads inventory dataset based on historical searches, e.g. historical travel-related searches, e.g. historical flight searches.
- To provide a time-series estimation of how many searches we are likely to get in the future, e.g. travel-related searches, e.g. flight searches. The time-series estimation may be provided in real-time, e.g. in less than one second.
- To have a model to predict the number of impressions or clicks that an Ad on a specific webpage, e.g. a travel-related search webpage, will receive.
- To provide an improved way to measure Ads forecasting accuracy over time.
- To provide an architecture to generate new, or use extant, forecasting metrics based on historical data.

### Product goal

A product goal is to provide an Ads Forecasting service able to estimate Ads performance over time reliably and accurately. The service may be able to query for the historical searches and delivery data matching a line item's targeting in order to fit a model which predicts future inventory and then generates performance estimations. A line item is an item for presentation, e.g. on a web page, or in an app executing on a computer or on a smartphone, e.g. in which the item is associated with revenue or expenditure.

### An Earlier Solution

In an earlier solution, a Sponsored Portal uses an audience reach dataset built by an AudienceBuilder routine to calculate the forecasting. The portal performs a query over a Query Engine and database using the campaign targeting parameters to obtain the following values:
- Supplier Audience: the total number of unique users reached by the supplier in the predefined time period e.g. the most recent 30 days.
- Search Hits: the total of number of searches in the predefined time period e.g the most recent 30 days, by the given search targeting.
- Targeted Audience: the total number of unique users reached in the predefined time period e.g the most recent 30 days, by the given search targeting.

Then the following forecasting metrics may be calculated using the previous values obtained by querying the Query Engine and database:
A metric is reach: the estimated total number of people (unique users) who will potentially see the ad.

A metric is impressions: the estimated number of times the ad is displayed.

A metric is clicks: the estimated number of times the ad is clicked. A CTR (Click-Through Rate) by placement is used to make the calculation. CTR (Click-Through Rate) is the number of clicks divided by the number of impressions.

A metric is frequency: the estimated number of times each individual will see the ad. A metric is audience: It represents the percentage of people likely to see the campaign compared with the total number of searches, e.g. the total number of Skyscanner searches.

In order to generate the audience reach data there is an Extract, Transform, Load (ETL) job that runs on an analytics engine for large-scale data processing, e.g. Apache Spark, e.g. Apache Spark running on AWS. The analytics engine for large-scale data processing, e.g. Apache Spark, provides an interface for programming clusters with implicit data parallelism and fault tolerance. Two analytics engine for large-scale data processing, e.g. Apache Spark, jobs may take place:
- Job 1 joins a predefined time period, e.g the most recent 30 days, of historical search data, e.g. historical travel search data, e.g. historical flight search data (e.g. flight pricing service (FPS)_sessions_started ) to other sources for enrichment;
- Job 2 reads the generated data from a service for object storage through a web service interface (e.g Amazon Simple Storage Service (S3)) and bulk indexes it in a Query Engine and database using the analytics engine for large-scale data processing, e.g. Apache Spark, Query Engine and database driver.

What was not working so well?

We have noticed that the earlier forecasting service is not giving accurate performance metrics for a travel-related (e.g. flights) search website. For example, over a three months data analysis period only 28% of the click predictions over the data analysis period were in the ±50% range of the actual clicks. Also, the CTR predictions are not as accurate as they could be. 31% of the CTR predictions over the three months data analysis period were in the ±20% range of an actual campaign CTR.

### Design goal

This design replaces the earlier way we estimated Ads performance, in order to:
1) Improve the Ads forecasting metrics accuracy of the earlier service by creating a new one that:
   - Builds an Ads inventory, for webpage-presented products, from the historical searches, e.g. historical travel-related searches, e.g. historical flight searches.
   - Generates a time-series projection in the future of Ads delivery based on the Ads inventory, e.g. using a specialized third-party tool.
   - Calculate an estimation of the Ads performance metrics based on the delivery projection.
2) Measure and monitor Ads forecasting accuracy e.g. daily.

For Ads performance estimation, this may be performed such that when creating/editing a line item, performance estimation metrics are shown through a forecasting widget in the Sponsored Portal Front End.

For Forecasting service, this may be performed such that: given a line item's search targeting criteria, the Sponsored Portal Back End calls the Forecasting service to get the values that feed the forecasting widget; A Campaign Optimiser routine may request the forecasting service to estimate budget consumption for a line item.

For Ads Flights Search, Events dataset, this may be performed such that: provision and maintenance of the Ads Flight Search events dataset used to build the forecasting inventory is provided.

### Overview and Theory of Operation

### Architecture Overview

The following is an example Forecasting Architecture, which covers the Ads inventory dataset generation and the Ads performance forecasting. The focus is on inline ad products (e.g. for iOS, Android, desktop, and mobile web). However, this solution can be scaled to accommodate other ad products, such as on a homepage, or for a Country Spotlight search and presentation web page content.

In an example of a forecasting architecture, a sponsored portal requests a forecast from a forecasting service. The forecasting service queries inventory, by querying advertising indexes stored in a data & report engine; the data & report engine also includes an ETL and an Events database. The advertising indexes may include one or more, or all, of: placement, tagging, user ID, Impression {0,1}, View {0,1}, and Click {0,1}. The advertising indexes include data ingested from an Ads Forecasting Inventory DAG in the ETL. The ETL also includes an Ads Inventory DAG and an Ads Forecasting Accuracy DAG. The ETL receives data by extraction and transformation from the Events database which includes one or more, or all, of: AdResponse, PricingSessionStarted, Ad Impression, Ad View, Ad Click and Ad Forecast data. The Events database is populated from an internal data streaming platform. The internal data streaming platform receives pushed forecast events from the forecasting service. After receiving the forecast, which may be received in real-time, e.g. in less than one second from its request, the sponsored portal writes the ad campaign with forecasting to a sponsored datalayer. The sponsored datalayer dumps campaigns to a web service interface (e.g, S3). The web service interface (e.g, S3) also gets campaigns from the ETL.

When the forecasting service pushes the forecast events to the internal data streaming platform and on to the events database, these forecast events can be used to compare the forecast with measured advertising performance data, to evaluate the forecasting performance, and to use the measured forecasting performance to modify future forecasting, with the aim of improving the accuracy of the forecasting.

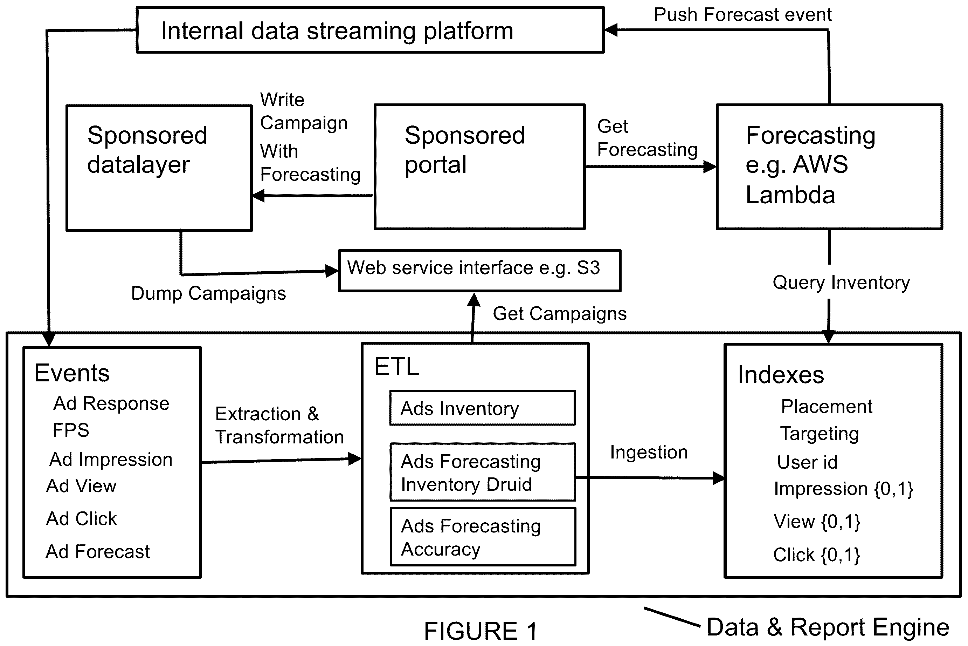

**Figure** 1 shows an example of a Forecasting Architecture.

### Forecasting Architecture Components

### Data & Report Engine

These components are ones in charge of extracting, building, enriching, and indexing the data to then be queried to calculate historical inventory.

### Inventory Dataset

The forecasting inventory data may be extracted from the following trusted tables examples:
AdResponse: the events logged by the Delivery Service when it receives a request from the frontend. From this dataset, we extract the placements that were requested in the Delivery Service and the (e.g flight) pricing service (FPS) session id related to the request. This last value is then used to make a join with the (e.g. Flight)SearchPricing table to extract the search criteria parameters.

(E.g. Flights)PricingSessionStarted: The (e.g flight) searches made for specific web pages. This trusted table contains (e.g. all) the data related to the search targeting criteria, and also the suppliers that were pinged for an itinerary for the (e.g flight) search. The table is used to extract the targeting search criteria related to an AdResponse event (e.g. Searched Routes Count), and to get (e.g. all) the suppliers with an itinerary for a targeting criteria (e.g. Supplier Searched Route).

Geographical data routine: geo-location information. Usages may include: E.g. FPS table stores Route Node IDs as location identifiers (origin and destination). E.g. Sponsored Portal uses Sky Codes and location identifiers. In an example, it is required to perform a mapping between location Route Node ID, Entity ID, and Sky codes to make the proper queries.

Ads (e.g. Flight) SearchEvents: Contains ads events (e.g. impressions, clicks, views), unified in a single entry, joined with the search data (e.g. through FPS table) related to the request made to the Delivery Service. This table is used to extract the performance values of the ads for a targeting, e.g. a route and a placement (e.g. Placement Route Performance).

The resulting dataset may be saved in a container for objects e.g. forecasting bucket, e.g. S3 bucket (e.g. 's3://forecasting/') e.g. in Apache parquet format, to be consumed by the Apache Airflow Druid operator and then be ingested in the Apache Druid cluster. Apache Druid is a high performance, real-time analytics database that delivers sub-second answers to queries on streaming and batch data at scale and under load. Apache Airflow is a platform created by the community to programmatically author, schedule and monitor workflows.

Apache Parquet is an open source, column-oriented data file format designed for efficient data storage and retrieval. It provides efficient data compression and encoding schemes with enhanced performance to handle complex data in bulk. Apache Parquet is designed to be a common interchange format for both batch and interactive workloads.

An example dataset is shown in the following Table.

| **Field** | **Description** | **Source** | **Sample value** |
|---|---|---|---|
| view_count | Number of total views for all the ads delivered for the targeting criteria | Ads Flight Search Events aggregation | 309 |
| User_ID | View user ID | Flight Search Pricing | 82891d9278194ce480c08d9124 b255cb |
| trip_type | Return, one-way or multi-city | Ads Flight Search Events | ONE_WAY |
| route_type | Domestic or international | Flight Search Pricing | international |
| return_dt | Search return date | Flight Search Pricing | 2024-02-20 |
| placement_id | Request placement | Ad Response | mobile.flights.view/inline |
| supplier_ids | List of website id of the suppliers that has an itinerary in the targeting route | Flight Search Pricing | ["airf", "klm1", "aaar", "avin", "ba__"] |
| origin_country_code | Origin country code | Geographical data routine | ES |
| origin_city | Origin city IDs (Sky Code, Route Node ID, Entity ID) | Geographical data routine | { "routenodeid": "967", "sky_code": "BILB", "entity_id": "27538794" } |
| origin_airport | Origin airport IDs (Sky Code, Route Node ID, Entity ID) | Geographical data routine | { "routenodeid": "9925", "sky_code": "BIO", "entity_id": "95565104" } |
| Market | Which country the user is in when they perform the search | Flight Search Pricing / Ads Flight Search Events | AR |
| Locale | Users language settings | Flight Search Pricing / Ads Flight Search Events | es-MX |
| infant_passengers | Number of infant passengers (<2) | Flight Search Pricing / Ads Flight Search Events | 0 |
| impression_count | Number of total impressions for all the ads delivered for the targeting criteria | Ads Flight Search Events aggregation | 489 |
| fps_session_id | Search session ID | Ad Response | e5b6e107-f2f8-4f86-8898-8b8712579397 |
| Dt | Inventory date | | 2023-07-01 |
| destination_contry _code | Destination country code | Geographical data routine | PH |
| destination_city | Destination city/island IDs (Sky Code, Route Node ID, Entity ID) | Geographical data routine | { "routenodeid": "5186", "sky_code": "MNLP", "entity_id": "27544979" } |
| destination_airport | Destination airport IDs (Sky Code, Route Node ID, Entity ID) | Geographical data routine | { "routenodeid": "14213", "sky_code": "MNL", "entity_id": "95673326" } |
| departure_dt | Search departure date | Flight Search Pricing | 2023-12-03 |
| click_count | Number of total clicks for all the ads delivered for the targeting criteria | Ads Flight Search Events aggregation | 120 |
| child_passengers | Number of child passengers (age 2-15) | Flight Search Pricing / Ads Flight Search Events | 1 |
| cabin_class | Economy, first, economy premium or business | Flight Search Pricing / Ads Flight Search Events | ECONOMY |
| booking_horizon | The difference between the search date and the departure Date | Flight Search Pricing / Ads Flight Search Events | 12 |
| adult_passengers | Number of adult passengers (age >15) | Flight Search Pricing / Ads Flight Search Events | 2 |

In an example, there are typically 6 million to 8 million rows for this dataset, per predefined time period, e.g. per day. In an example, there are at least 1 million rows for this dataset, per predefined time period, e.g. per day. In an example, there are at least 100,000 rows for this dataset, per predefined time period, e.g. per day. The previous inventory dataset stored in the Query Engine and database had an average count of about 24 million rows per day.

### Extract, Transform, Load (ETL)

In an example, there are at least three DAGs running (e.g. daily) in a platform which programmatically authors, schedules and monitors workflows, e.g. in Apache Airflow, to extract the inventory data, e.g. from the previous day, and ingest it in a real-time analytics database that delivers real-time (e.g. sub-one second) answers to queries on streaming and batch data, e.g. at large scale and under large loads, e.g. in Apache druid:
1) Ads Forecasting Inventory directed acyclic graph (DAG): runs the jobs to extract data from the pricing service, e.g. FPS, table, and the Delivery Service events, to build the daily forecast inventory. It may be composed of at least two operators:
   - Sensor that waits for the Ads (e.g. Flight) Search Events builder job in the Ads Reports DAG to finish successfully.
   - An analytics engine for large-scale data processing (e.g. Apache Spark) application job that builds the forecast inventory dataset and saves it in a container for objects e.g. the forecast (e.g. S3) bucket, e.g. in Apache parquet format.
2) Ads Forecasting Inventory (e.g. Apache Druid) DAG: runs the jobs to extract the data from the different events to build the daily forecasting inventory dataset to be ingested in indexes of a real-time analytics database that delivers real-time (e.g. sub-one second) answers to queries on streaming and batch data, e.g. at large scale and under large loads, e.g. Apache Druid, for later queries. In an example it is composed of at least two operators:
   - A sensor that waits for the forecast inventory builder job (e.g. from the previous DAG) to finish successfully;
   - An operator of a real-time analytics database that delivers real-time (e.g. sub-one second) answers to queries on streaming and batch data, e.g. at large scale and under large loads, e.g. Apache Druid, that takes the inventory dataset saved in (e.g. Apache parquet) format in a container for objects e.g. the forecast (e.g. S3) bucket and ingests it in a real-time analytics database cluster that delivers real-time (e.g. sub-one second) answers to queries on streaming and batch data, e.g. at large scale and under large loads, e.g. Apache Druid cluster.
3) Ads Forecasting Accuracy Report DAG: runs the jobs to extract the ads line items forecasted values and actual performance metrics to create a forecasting accuracy report. In an example, it is composed of at least three operators:
   - An analytics engine for large-scale data processing (e.g. Apache Spark) app job that builds the daily report of the actual number of search hits given the targeting criteria of the active ads line items. To support the previous system, there was a Python operator that hits the Sponsored Datalayer endpoint (e.g. /export-audiencereach-changes-s3) that exports the forecasts for all ads line items. For the new system, the Forecasting Service (Prophecy) sends an event with the forecasted time-series, so it then can be obtained in the (e.g. Apache spark) job through a trusted table;
   - A Sensor that waits for the daily ads line items performance report builder in the Ads Reports DAG to finish successfully;
   - An analytics engine for large-scale data processing (e.g. Apache Spark) app job that takes the data extracted in the previous steps, the search hits for the ads line items targeting criteria, the forecasted values of the active ads line items, and their actual performance, to build the accuracy report and save it in a trusted table (e.g. ads_line_item_search_hits).

In an example of Extract, Transform, Load processes, an Ads Report DAG includes an Ads (e.g. flight) search events builder and an Ads daily line item performance builder. An Ads Inventory DAG includes an Ads (e.g. flight) search events sensor which waits for the Ads (e.g. Flight) Search Events builder job in the Ads Reports DAG to finish successfully, then an Ads forecast inventory builder in the Ads Inventory DAG builds the forecast inventory dataset and saves it in a container for objects e.g. the forecast (e.g. S3) bucket, e.g. in Apache parquet format. An Ads forecast inventory sensor in an Ads forecast inventory Druid DAG waits for the Ads forecast inventory builder in the Ads Inventory DAG to finish, then in the Ads forecast inventory Druid DAG an operator of a real-time analytics database that delivers real-time (e.g. sub-one second) answers to queries on streaming and batch data, e.g. at large scale and under large loads, e.g. Apache Druid, takes the inventory dataset saved in (e.g. Apache parquet) format in the container for objects e.g. the forecast (e.g. S3) bucket and ingests it, including indexing, in a real-time analytics database cluster that delivers real-time (e.g. sub-one second) answers to queries on streaming and batch data, e.g. at large scale and under large loads, e.g. Apache Druid cluster.

In this example, a sensor in an Ads Forecasting Accuracy DAG waits for the Ads daily line item performance builder in the Ads Report DAG to finish, then a daily report is built in the Ads Forecasting Accuracy DAG of the actual number of search hits given the targeting criteria of the active ads line items, and the report and an ads line item forecast builder in the Ads Forecasting Accuracy DAG, are used to create a forecast accuracy report in the Ads Forecasting Accuracy DAG. The ads line item forecast builder is built by exporting an Ads line item forecasts history to a sponsored datalayer, which dumps line items forecasts into the ads line item forecast builder via a webservice interface (e.g. S3).

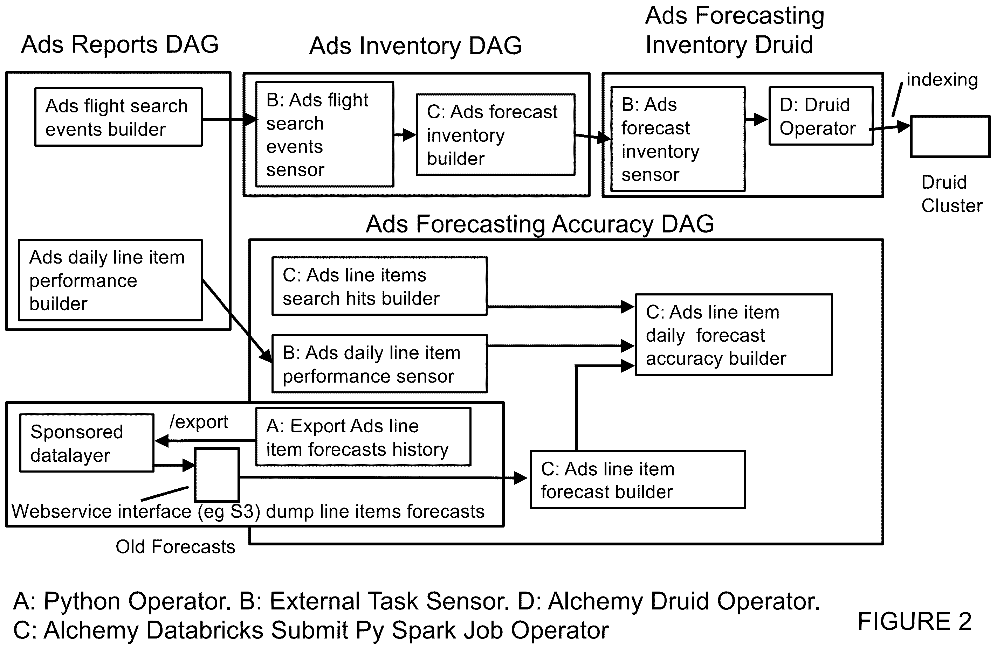

An example of Extract, Transform, Load processes is shown in **Figure 2****.**

### OLAP (Online Analytical Processing)

Indexes from the different targeting fields in the forecast inventory and placements are created from the dataset ingested in a real-time analytics database cluster that delivers real-time (e.g. sub-one second) answers to queries on streaming and batch data, e.g. at large scale and under large loads, e.g. Apache Druid, so (e.g. all) products are covered. The data spec may be defined in the (e.g. Apache Druid) Operator in the (e.g. Apache Airflow) DAG.

Example Spec definition:

```
 "spec": {
 "dataSchema": {
 "dataSource": "ads_forecasting_inventory",
 "timestampSpec": {
 "column": "dt",
 "format": "auto",
 "missingValue": null
 },
 "dimensionsSpec": {
 "dimensions": [{
 "type": "string",
 "name": "user_id",
 "multiValueHandling": "SORTED_ARRAY",
 "createBitmapIndex": true
 },
 {
 "type": "string",
 "name": "placement_id",
 "multiValueHandling": "SORTED_ARRAY",
 "createBitmapIndex": true
 },
 {
 "type": "string",
 "name": "market",
 "multiValueHandling": "SORTED_ARRAY",
 "createBitmapIndex": true
 },
 {
 "type": "string",
 "name": "locale",
 "multiValueHandling": "SORTED_ARRAY",
 "createBitmapIndex": true
 },
 {
 "type": "string",
 "name": "origin_country_code",
 "multiValueHandling": "SORTED_ARRAY",
 "createBitmapIndex": true
 },
 {
 "type": "string",
 "name": "origin_city",
 "multiValueHandling": "SORTED_ARRAY",
 "createBitmapIndex": true
 },
 {
 "type": "string",
 "name": "origin_airport",
 "multiValueHandling": "SORTED_ARRAY",
 "createBitmapIndex": true
 },
 {
 "type": "string",
 "name": "destination_country_code",
 "multiValueHandling": "SORTED_ARRAY",
 "createBitmapIndex": true
 },
 {
 "type": "string",
 "name": "destination_city",
 "multiValueHandling": "SORTED_ARRAY",
 "createBitmapIndex": true
 },
 {
 "type": "string",
 "name": "destination_airport",
 "multiValueHandling": "SORTED_ARRAY",
 "createBitmapIndex": true
 },
 {
 "type": "string",
 "name": "cabin-class",
 "multiValueHandling": "SORTED_ARRAY",
 "createBitmaplndex": true
 },
 {
 "type": "string",
 "name": "trip_type",
 "multiValueHandling": "SORTED_ARRAY",
 "createBitmapIndex": true
 },
 {
 "type": "string",
 "name": "route_type",
 "multiValueHandling": "SORTED_ARRAY",
 "createBitmapIndex": true
 },
 {
 "type": "string",
 "name": "departure_dt",
 "multiValueHandling": "SORTED_ARRAY",
 "createBitmapIndex": true
 },
 {
 "type": "long",
 "name": "booking_horizon",
 "multiValueHandling": "SORTED_ARRAY",
 "createBitmapIndex": false
 },
 {
 "type": "long",
 "name": "adult_passengers",
 "multiValueHandling": "SORTED_ARRAY",
 "createBitmapIndex": false
 },
 {
 "type": "long",
 "name": "child_passengers",
 "multiValueHandling": "SORTED_ARRAY",
 "createBitmapIndex": false
 },
 {
 "type": "long",
 "name": "infant_passengers",
 "multiValueHandling": "SORTED_ARRAY",
 "createBitmapIndex": false
 },
 {
 "type": "string",
 "name": "supplier_ids",
 "multiValueHandling": "SORTED_SET",
 "createBitmapIndex": true
 }
 ],
 "dimensionExclusions": [
 "dt",
 "_time",
 "count",
 "click_count",
 "view_count",
 "impression_count"
 ]
 },
 "metricsSpec": [{
 "type": "count",
 "name": "count"
 },
 {
 "type": "longSum",
 "name": "click_count",
 "fieldName": "click_count",
 "expression": null
 },
 {
 "type": "longSum",
 "name": "impression_count",
 "fieldName": "impression_count",
 "expression": null
 },
 {
 "type": "longSum",
 "name": "view_count",
 "fieldName": "view_count",
 "expression": null
 }
 ],
 "granularitySpec": {
 "type": "uniform",
 "segmentGranularity": "DAY",
 "queryGranularity": "DAY",
 "rollup": true,
 },
 }
 }
```

The spec data schema ingested in a real-time analytics database cluster that delivers real-time (e.g. sub-one second) answers to queries on streaming and batch data, e.g. at large scale and under large loads, e.g. Apache Druid, is similar to the forecast inventory dataset, but the following details may be different:
- fps_session_id is excluded and a rollup is made. The real-time analytics database cluster (e.g. Apache Druid) can summarize raw data at ingestion time using a process we refer to as "rollup". Rollup is a first-level aggregation operation over a selected set of columns that reduces the size of stored data;
- destination_city, origin_city, destination_airport, and origin_airport are represented by the location entity id (string).

In the previous solution, a Query Engine and database was used to store the inventory and make queries over it. The new solution replaces this with a real-time analytics database that delivers real-time (e.g. sub-one second) answers to queries on streaming and batch data, e.g. at large scale and under large loads, e.g. Apache Druid, to validate that we can execute the same queries.

### Forecasting Service (which we may refer to as "Prophecy")

In an example, the forecasting service (which we may refer to as "Prophecy") is implemented as a Lambda function. This is to obtain the benefits of serverless service, and to obtain the benefits of no maintenance to the service. AWS Lambda is a serverless, event-driven compute service that permits running code for a broad set of types of application or backend service without provisioning or managing servers. Lambda can be triggered from over 200 AWS services and software as a service (SaaS) applications.

A high level purpose of the forecasting service is to provide a prediction for the clicks and impressions a line item will receive given its search targeting criteria. It is a replacement to the Audience Reach service, which provides a dataset of historical searches made e.g. on skyscanner.net. An aim of the new service is to create a forecast based on more accurate data and to remove some of the assumptions made in the logic following the dataset queries.

In an example, the new service works by getting a daily time series of historical searches, impressions and clicks and using it to derive a more accurate CTR, and create a projection of inventory by training and querying a machine learning (ML) model in real time. As searches, also referred to as inventory, represents the upper bound of possible clicks and impressions (without repetition), it is the starting point of the prediction algorithm. If our estimations of inventory are correct, we are more likely to produce an accurate forecast.

The logic implemented by this infrastructure component may take the search targeting criteria of a line item and produce forecasting metrics. This may involve the following steps:
- Receive the search targeting criteria of a line item as input;
- Transform the different targeting dimensions plus the placement to the indexing query syntax;
- Request the historic info from the indexing infrastructure. This typically will query according to the targeting, then get predicting inventory because inventory represents the upper bound on impressions, and thus clicks, that a line item can get;
- Calculate the final expected tally of predicted clicks and impressions to return in the response using the CTR, or click through rate, which is the expected ratio of clicks to impressions, estimated from the time-series response e.g. from Apache Druid;
- Send an event with the forecasted time-series, so then it may be used for the accuracy report.

In an example of an operation of a forecasting service, a forecasting service request handler receives a request for a forecast from a sponsored portal for a prediction of the number of clicks and impressions a line item will receive given the line item's search targeting criteria and placement data. The request handler then translates the targeting criteria and the placement data into an index querying syntax. The request handler then uses the index querying syntax to request inventory from a service which makes a request to a database system that allows fast queries on very large datasets, e.g. a Apache Druid. The service then receives a (e.g. daily) time series of historical searches from the database system that allows fast queries on very large datasets, e.g. from Apache Druid. The service then returns the requested inventory to the request handler. The request handler then uses the returned inventory in a request to a real-time service which makes a forecast of the number of clicks and impressions a line item will receive, in which the real-time service provides the forecast in real time, e.g. in less than one second. An example of such a real-time service is prophet by Facebook. The request handler receives the requested forecast from the real-time service. The request handler then uses the received forecast of the number of clicks and impressions the line item will receive, to derive a CTR for the line item. A forecast of the number of clicks and impressions a line item will receive, and the CTR, is returned by the request handler to the sponsored portal.

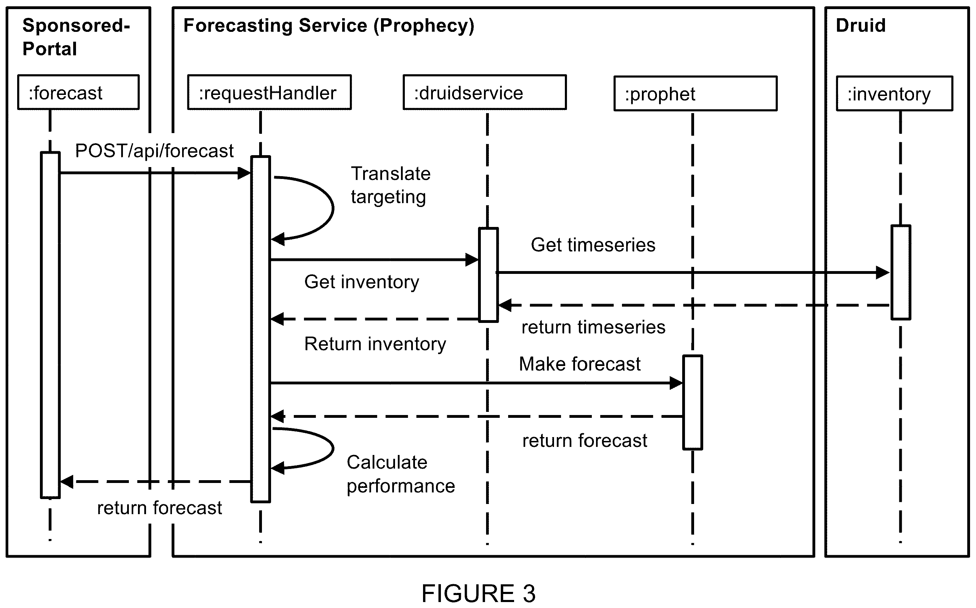

An example of interaction between a forecasting service, and a sponsored portal, and a database system that allows fast queries on very large datasets, e.g. Apache Druid, is shown in **Figure 3****.**

### Application programming interface (API)

A forecasting service (e.g. Prophecy) may have a (e.g. single) api endpoint responsible for producing a forecast. The endpoint may be designed to be called from a Sponsored Portal to get a forecast for a line item.
Example Method: POST
Example Endpoint: /api/forecast
Example Request:
Example Request Payload

```
 {
 "id": "CAM-f799ffcfcdfa-424c-b784-083148bbdca9",
 "placementIds": ["desktop.flights.dayview/inline", "mobile.flights.dayview/inline"],
 "delivery": {
 "mode": "STANDARD",
 "startDate": "2023-08-18T19:30:00.000Z",
 "endDate": "2023-08-18T23:59:59.999Z",
 },
 "budget": {"amount": 12700, "type": "CPC", "duration": "LIFETIME", "cost": 2},
 "targeting": {
 "markets": ["US"],
 "locales": [],
 "searchTypes": ["round", "one_way", "multi_city"],
 "supplier": "uair",
 "routeType": "custom",
 "routes": [
 {"origin": [{"city": "27546320"}], "destination": [{"city": "27537542"}, {"city":
 "33835676"}]}
 ],
 "excludedLocations": [
 {"origin": [{"city": "1234"}], "destination": []}
 ],
 "cabinClasses": ["Economy", "PremiumEconomy", "Business", "First"],
 "minDays": 1,
 "maxDays": 14,
 },
 }
 
```

### Example Response:

### Phase 1 - MVP

Example Response Payload

```
{
 "id": 43bb4355-c96c-4514-adcf-c690dec3919f",
 "forecast": {
 "impressions": {
 "total": {
 "lower": 1200,
 "upper": 1800,
 "predicted": 1550
 }
 },
 "clicks": {
 "total": {
 "lower": 80,
 "upper": 110,
 "predicted": 92
 }
 }
 }
 
```

### Phase 2- Reach

Example Response Payload

```
{
 "id": 43bb4355-c96c-4514-adcf-c690dec3919f",
 "forecast": {
 "impressions": {
 "total": {
 "lower": 1200,
 "upper": 1800,
 "predicted": 1550
 }
 },
 "clicks": {
 "total": {
 "lower": 80,
 "upper": 110,
 "predicted": 92
 }
 },
 "reach": {
 "total": {
 "lower": 5400,
 "upper": 8700,
 "predicted": 7899
 }
 },
 "frequency": {
 "total": {
 "lower": 3.3,
 "upper": 6.2,
 "predicted": 4.5
```

### Sponsored Portal

In the previous approach, Sponsored Portal queries the audience reach dataset from the Query Engine and database, through the reach service (e.g. in a Back End), to get the search hits, supplier audience, and targeted audience for a given search targeting criteria. The result from the reach service is sent to the Sponsored Datalayer to be stored every time a line item is created or updated. The values obtained from the reach service are used to calculate the Ad performance estimation and are shown in the forecasting widget (e.g. in a Front End).

In a website structure, the terms frontend (or sometimes referred to as front end or front-end) and backend (or sometimes referred to as back end or back-end) refer to the separation of concerns between the frontend, e.g. the presentation layer, and the backend, e.g. the data access layer. The terms front end and backend may be used in respect of software. The terms front end and backend may be used in respect of hardware.

For the new architecture, given that different pieces of logic are required to produce an estimation of performance and supply, that logic may be isolated in its own service, the Forecasting Service. The Sponsored Portal may call the Forecasting Service to obtain the Ads performance estimations.

### Language and Frameworks

The Forecasting Service may be built using Python, creating a service structure that uses a cookiecutter command-line tool to generate a project template. Cookiecutter is a cross-platform command-line utility that creates projects from cookiecutters (project templates), e.g. Python package projects, C projects.

### Prophet

Prophet is a library by Facebook that provides an interface to a machine learning model that can be trained and predict impressions on the fly. The library may be used from the Forecasting Service to generate a time series projection given a search targeting criteria input. The model may ingest the historical inventory data and produce a time series projection as its output.

### Druid

Apache Druid is a database system that allows fast queries on very large datasets. As opposed to tools like Databricks, it allows running analytics queries where the results need to be returned quickly. In the previous approach, we were using a Query Engine and database cluster to store the forecasting inventory, and in an example of the new approach Apache Druid may be used for the following reason: we can use a managed Apache Druid cluster in a web services account, e.g. a AWS account.

The Forecasting Service may use PyDruid as a client library, for the integration with Apache Druid, to ensure the correct format of the query to Druid. PyDruid allows Python users to query Druid-and export the results to useful formats-in a way that makes sense to them. At this step, the line item targeting object may be translated into a series of Filter objects that are then used to query Druid for the inventory time series.

### Security & Privacy

The service must comply with Security and Privacy Standards:
- Data Protection and Privacy
- Privacy Impact Assessment, Data Record Inventory
- Data Subject Rights, Tracking Technology
- New Tracking Technologies Process

### Personal Data Protection

A Unique user ID may be used to identify and track Anonymous and Authenticated users on the Skyscanner platform. To calculate how many unique users are being reached by a line item we may include this value into the forecasting inventory dataset. User ID is considered private data, since it can be used to identify travelers, for this reason, an SHA-2 hash function may be applied over this value in the data transformation process, and may be stored this way. SHA-2 (Secure Hash Algorithm 2) is a set of cryptographic hash functions designed by the United States National Security Agency (NSA) and first published in 2001.

### Monitoring, Metrics, Logging, and Alerting

Metrics or logs may be included at each step in the process.

### Data and Report Engine: ETL

### Alerting:

A reporting app (e.g. Dagger App) may be set in a communication channel (e.g. a Slack channel) and a platform to programmatically author, schedule and monitor workflows (e.g. Apache Airflow) may be configured to report any task failure in the DAGs in the communication channel (e.g. the Slack channel), using the reporting app. Slack organises conversations in a workspace into dedicated spaces called channels. Slack is provided by Slack Technologies, LLC.

### Logging:

Apps logs set in code using a logger module may be shown in the task's logs section of the platform to programmatically author, schedule and monitor workflows (e.g. Apache Airflow) DAG UI. For example, all the analytics engine for large-scale data processing, e.g. Apache Spark, apps logs set in code using a (e.g. Python's) logger module may be shown in the task's logs section of the platform to programmatically author, schedule and monitor workflows (e.g. Apache Airflow) DAG UI. These operational logs may be useful to log the counts of the output of intermediate dataframes as well as the final written dataframe. Also, logs regarding operational information regarding the platform to programmatically author, schedule and monitor workflows (e.g. Apache Airflow) execution process may be shown in the DAG UI.

### Metrics:

In the (e.g. daily) accuracy report made by the analytics engine for large-scale data processing, e.g. Apache Spark, app we measure ads forecasting accuracy of a line item using the percentage error between the forecast value and the actual value e.g. for that day. This may be done for inventory, impressions, and CTR. The percentage error value is calculated using the following expression: ( actual - predicted / actual ) * 100. These values may be saved in a table in the ETL. After the table is produced, we may read the data, perform some aggregations and then build metrics that are pushed e.g. to an internal data streaming platform.

In a dashboard in an analytics and interactive visualization web application (e.g. Grafana, a multi-platform open source analytics and interactive visualization web application: it provides charts, graphs, and alerts for the web when connected to supported data sources) we have grouped these percentage errors in different ways that enable us to examine overall accuracy through different metrics. By understanding the distribution of the errors and the mean absolute percentage errors across all lines, we can get an understanding of how the forecasting algorithm is performing.

### Forecasting Service

### Alerting:

Operation alerts may be given for the instance resources consumption (e.g. Memory usage, e.g. central processing unit (CPU) usage), i.e. resources consumption for running the Forecasting Service. Warning messages may be shown in the communication alert channel (e.g. slack alert channel) when the resources consumption reaches a predefined threshold. An operational graph may be shown (e.g. using New Relic software. New Relic is a web tracking and analytics company. The company's cloud-based software allows websites and mobile apps to track user interactions and service operators' software and hardware performance) to monitor memory and CPU usage. Additional resources may be automatically requested, in response to when an operation alert is generated regarding resources consumption for running the Forecasting Service. Additional resources may be automatically provided, in response to when an operation alert is generated regarding resources consumption for running the Forecasting Service.

An alert may be given when the forecast service returns an error response (e.g. 5XX or 4XX).

An alert may be given when the service is unavailable.

### Logging:

In an example, logs programmatically set by a logger module are pushed, so they can be queried historically through a user interface (UI). In an example, logs programmatically set by the Python's logger module will be pushed to New Relic, so they can be queried historically through the New Relic UI.

After the forecasting (e.g. Prophecy) model is trained, the model may be tested. In an example, an intermediate forecast for dates in the past is made, and that forecast output is compared to the actual historical data for those past dates. The percentage error in the test is evaluated in order to evaluate how it changes over time; an alert may be sent when the error is too high: sending a log is one way that this may be done.

### Real-time database designed to power analytics applications, e.g. Apache Druid (e.g. imply.io)

(Imply Data, Inc. is a software company. It develops and provides commercial support for the open-source Apache Druid, a real-time database designed to power analytics applications.)

Alerting: There would be set corresponding alerts on the real-time database designed to power analytics applications (e.g. imply Druid) ingestion side to report these events. In an example, these alerts are set up using Clarity which is Imply's system to monitor managed Druid clusters. Example alerts include:
- Events Unparseable: Some of the records could not be parsed and ingested e.g. in Druid.
- Events Thrown Away: Some of the records were discarded e.g. by Druid
- < 1000 records processed: Less than 1000 records were ingested.

Logging: In the e.g. Apache Druid (e.g. imply.io) UI a user or a process can check the operational logs for the ingestion tasks.

Metrics: A Real-time database designed to power analytics applications (e.g. SQLAlchemy Druid) Operator used to ingest the inventory would call the (e.g. Druid) API to get the results of the ingestion task, including the number of ingested rows, which may be pushed as a metric. A graph can be created for monitoring purposes. The SQLAlchemy SQL Toolkit and Object Relational Mapper is a comprehensive set of tools for working with databases and Python. SQL is structured query language.

### Deployment

In a deployment, this new architecture is deployed while keeping the previous forecasting solution. This means, that for the initial release, both the previous system and the new system would be called whenever a user makes a forecast, however the results of the new system may not be returned to the user at this stage. We call this Shadow Mode. The results from the new system will be logged with the event and added to the forecast accuracy (e.g. ads_line_item_daily_forecast_accuracy) table. For some time there are two sets of metrics for each line item: one for the old forecast and one for the new forecast. This enables us to make a direct comparison between the two forecasts. This also gives us time to improve the accuracy of the new system if needed before switching (e.g. completely) from the old solution the new solution. Once the model accuracy is determined and the new forecasting service is stable, we may make the switch (e.g. for flights products) from the old system to the new system.

### Request Strategy

In the old forecast system, this operates typically at a response time of anywhere from 5 to 15 seconds. For calculating the estimated total number of people (unique users) who will potentially see an ad, on the other hand, the response time is usually sub-second. Because of this, it is not as straightforward to call at the same time both the old forecast system and a calculation for the estimated total number of people (unique users) who will potentially see an ad. Ideally, the old forecast system in shadow mode is only called once the line item is ready to be saved. In an example, the calculation for the estimated total number of people (unique users) who will potentially see an ad is called every time a user makes an edit to a line. This is not suitable for the old forecast system as there are also cost considerations of hitting the high performance, real-time analytics database that delivers sub-second answers to queries on streaming and batch data at scale and under load (e.g. Apache druid cluster) so frequently. Also we wouldn't want to make a new request to the old forecast system before the answer to an earlier request has been returned. One option is to change the UI interface to include a call to action (CTA) button that is selectable to generate a forecast intentionally. This of course has the downside of requiring a user action to get an updated forecast.

### Measuring accuracy

In an example, forecast accuracy results vary a lot and the model requires some more tuning. Inspecting the metrics for the old system and for the new system side by side (e.g. in Grafana) may give us a good idea of not only the absolute accuracy, but also how the new system performs compared to the old (in which the old system may be quite volatile). There is no one single 'accuracy' metric that can be applied to the whole system and be representative of the sum of its parts. We typically inspect the accuracy of the forecasting service (e.g. prophet), the inventory predictions, and the impressions and CTR predictions in order to determine which aspects of the service need to be tuned in order to accomplish the goal of creating a much more reliable ads forecast service.

Although this disclosure emphasizes applications involving flights, other applications may be provided, such as for hotels or for car rental.

### Facebook Prophet

Facebook Prophet is a procedure for forecasting time series data based on an additive model where non-linear trends are fit with yearly, weekly, and daily seasonality, plus holiday effects. It works best with time series that have strong seasonal effects and several seasons of historical data. Prophet is robust to missing data and shifts in the trend, and typically handles outliers well.

### Amazon S3 or Amazon Simple Storage Service

Amazon S3, or Amazon Simple Storage Service, is a service offered by Amazon Web Services (AWS) that provides object storage through a web service interface. Amazon S3 uses the same scalable storage infrastructure that Amazon.com uses to run its e-commerce network. Amazon S3 can store any type of object, which allows uses like storage for Internet applications, backups, disaster recovery, data archives, data lakes for analytics, and hybrid cloud storage. AWS launched Amazon S3 in the United States on March 14, 2006, then in Europe in November 2007.

### CONCEPTS

1. A computer-implemented method of forecasting a number of clicks and a number of impressions a line item will receive in a defined time period, the method including the steps of:
   (i) a forecasting service receiving a request from a portal for a forecast of the number of clicks and the number of impressions a line item will receive in a defined time period, the request including targeting criteria and placement data;
   (ii) the forecasting service translating the targeting criteria and the placement data into an index querying syntax;
   (iii) the forecasting service using the index querying syntax to request inventory via a service;
   (iv) the service making a request corresponding to the index querying syntax for a time series of historical searches to a database system;
   (v) in response to the request, the service receiving the time series of historical searches from the database system;
   (vi) the service providing inventory to the forecasting service corresponding to the defined time period, based on the received time series of historical searches;
   (vii) the forecasting service using the returned inventory in a request to a real-time service which makes a forecast of the number of clicks and the number of impressions the line item will receive in the defined time period, in which the forecasting service receives the response from the real-time service in real time, e.g. in less than one second;
   (viii) the forecasting service using the received forecast of the number of clicks and the number of impressions the line item will receive in the defined time period, to derive a click-through-rate (CTR) for the line item;
   (ix) the forecasting service returning the forecast of the number of clicks and the number of impressions the line item will receive in the defined time period, and the click-through-rate (CTR) in the defined time period, to the portal.
2. The method of Concept 1, wherein the historical searches relate to flights, to hotel reservations, or to car rentals.
3. The method of any previous Concept, wherein the time series of historical searches is a time series of historical searches at predefined intervals.
4. The method of Concept 3, wherein the time series of historical searches is a daily time series of historical searches.
5. The method of any previous Concept, wherein the forecasting service is implemented as, or includes, a AWS Lambda function.
6. The method of any previous Concept, including creating a projection of inventory by training and querying a machine learning (ML) model in real time.
7. The method of any previous Concept, including receiving the search targeting criteria of a line item as input.
8. The method of any previous Concept, wherein the forecast of the number of clicks and the number of impressions the line item will receive in the defined time period includes a forecasted time series.
9. The method of Concept 8, wherein the forecasting service sends an event including the forecasted time-series, so then the event may be used for an accuracy report.
10. The method of any previous Concept, wherein the service makes a request to a database system that allows fast queries on very large datasets, e.g. a Apache Druid database system.
11. The method of any previous Concept, wherein the database system queries at least 100,000 rows of data, or at least 1 million rows of data, or at least 10 million rows of data, or at least 100 million rows of data.
12. The method of any previous Concept, wherein the real-time service which makes a forecast of the number of clicks and the number of impressions the line item will receive in the defined time period is, or includes, prophet by Facebook.
13. The method of Concept 12, wherein prophet by Facebook provides an interface to a machine learning model that can be trained and which, when trained, can predict impressions in less than one second.
14. The method of any previous Concept, wherein the line item is an advertisement or a news item.
15. The method of any previous Concept, wherein resources consumption are monitored, and an operation alert (e.g. warning message) is generated if the resources consumption reaches a predefined threshold.
16. The method of Concept 15, wherein additional resources are automatically requested, in response to when the operation alert is generated.
17. The method of Concepts 15 or 16, wherein additional resources are automatically provided, in response to when the operation alert is generated.
18. The method of any of Concepts 15 to 17, wherein resources consumption includes memory usage, or central processing unit (CPU) usage.
19. The method of any previous Concept, wherein an operation alert (e.g. warning message) is generated when the forecast service returns an error response.
20. The method of any previous Concept, wherein an operation alert (e.g. warning message) is generated when the forecast service is unavailable.
21. A system configured to perform a method of any of Concepts 1 to 20.
22. A computer-implemented method of building an advertisements forecast inventory dataset and ingesting the advertisements forecast inventory dataset in a real-time analytics database cluster, the method including the steps of:
   (i) an advertisements (e.g. flight) search events builder executing a builder job in a advertisements Reports directed acyclic graph (DAG) to build an advertisements (e.g. flight) search events dataset, until the builder job is complete;
   (ii) an advertisements (e.g. flight) search events sensor in an advertisements Inventory DAG waiting for the builder job to complete;
   (iii) an advertisements forecast inventory builder in the advertisements Inventory DAG building a forecast inventory dataset and saving the forecast inventory dataset in a format in a container for objects e.g. forecast bucket;
   (iv) an advertisements forecast inventory sensor in an advertisements forecast inventory DAG waiting for the advertisements forecast inventory builder in the advertisements Inventory DAG to finish;
   (v) in the advertisements forecast inventory DAG, an operator of a real-time analytics database that delivers real-time (e.g. sub-one second) answers to queries on streaming and batch data, e.g. Apache Druid, taking the inventory dataset saved in the (e.g. Apache parquet) format in the container for objects e.g. forecast bucket and ingesting the inventory dataset saved in the (e.g. Apache parquet) format, including indexing, in a real-time analytics database cluster that delivers real-time (e.g. sub-one second) answers to queries on streaming and batch data, e.g. in an Apache Druid cluster.
23. The method of Concept 22, the method including a method of any of Concepts 1 to 20.
24. The method of Concepts 22 or 23, in which the advertisements search events builder is, or includes, an advertisements flight search events builder, or an advertisements hotels search events builder, or an advertisements car rental search events builder.
25. The method of any of Concepts 22 to 24, in which the real-time analytics database cluster queries at least 100,000 rows of data, or at least 1 million rows of data, or at least 10 million rows of data, or at least 100 million rows of data.
26. The method of any of Concepts 22 to 25, in which the advertisements forecast inventory builder is an analytics engine for large-scale data processing (e.g. Apache Spark) application job.
27. The method of any of Concepts 22 to 26, in which the container for objects is a forecast bucket.
28. The method of Concept 27, in which the forecast bucket is a S3 bucket.
29. The method of any of Concepts 22 to 28, in which the advertisements Forecasting Inventory (e.g. Apache Druid) DAG: runs the jobs to extract the data from the different events to build the daily forecasting inventory dataset to be ingested in indexes of a real-time analytics database that delivers real-time (e.g. sub-one second) answers to queries on streaming and batch data, e.g. at large scale and under large loads, e.g. Apache Druid, for later queries.
30. The method of any of Concepts 22 to 29, in which the inventory dataset is for webpage-presented products.
31. The method of any of Concepts 22 to 30, in which the advertisements (e.g. flight) search events dataset is extracted from a pricing service, e.g. FPS, table.
32. A system configured to perform a method of any of Concepts 22 to 31.
33. A computer-implemented method of building and saving an advertisements forecasting accuracy report, the method including the steps of:
   (i) exporting an advertisements line items forecasts history to a datalayer;
   (ii) dumping line items forecasts from the datalayer, via a webservice interface, into an advertisements line items forecast builder in an advertisements Forecasting Accuracy directed acyclic graph (DAG), and building an advertisements line items forecast;
   (iii) an analytics engine for large-scale data processing (e.g. Apache Spark) in an advertisements Reports DAG receiving targeting criteria of active advertisements line items;
   (iv) the analytics engine for large-scale data processing (e.g. Apache Spark) in the advertisements Reports DAG executing a job to build a report of the advertisements line items performance, corresponding to a defined time period, of a number of search hits given the targeting criteria of the active advertisements line items;
   (v) a sensor in the advertisements Forecasting Accuracy DAG waiting for the advertisements line items performance report builder in the advertisements Reports DAG to finish;
   (vi) an analytics engine for large-scale data processing (e.g. Apache Spark) executing a job in the advertisements Forecasting Accuracy DAG using the report of the advertisements line items performance, the advertisements line items forecast, and the number of search hits given the targeting criteria of the active advertisements line items, to build the advertisements forecasting accuracy report and to save the advertisements forecasting accuracy report.
34. The method of Concept 33, the method including a method of any of Concepts 1 to 20, or of any of Concepts 22 to 31.
35. The method of Concepts 33 or 34, wherein the webservice interface is, or includes, a S3 interface.
36. The method of any of Concepts 33 to 35, wherein the advertisements forecasting accuracy report is saved in a trusted table.
37. The method of any of Concepts 33 to 36, wherein the defined time period is one day.
38. The method of any of Concepts 33 to 37, wherein the advertisements forecasting accuracy report is built and saved over an associated time period.
39. The method of Concept 38, wherein the associated time period is one day.
40. The method of any of Concepts 33 to 39, wherein the advertisements Forecasting Accuracy DAG runs the jobs to extract the ads line items forecasted values and actual performance metrics to create the forecasting accuracy report.
41. The method of any of Concepts 33 to 40, wherein the forecasting accuracy report includes a measurement of advertisement forecasting accuracy of a line item using the percentage error between the forecast value of the number of search hits given the targeting criteria and the actual value of the number of search hits e.g. for that day.
42. The method of any of Concepts 33 to 41, wherein for an initial release, both a previous method and the present method are used to generate respective forecasts, however the results of the present method might not be returned to the user at this stage, we call this shadow mode; the results from the present method are logged with an event and added to the forecast accuracy (e.g. ads_line_item_daily_forecast_accuracy) table; for some time there are stored two sets of forecasts for each line item: one for the previous method and one for the present method, to enable to make a direct comparison between the two forecasts.
43. The method of Concept 42, wherein the previous method in shadow mode is only called once the line item is ready to be saved.
44. A system configured to perform a method of any of Concepts 33 to 43.
45. A computer-implemented method of serving an advertisements campaign, the method including the steps of:
   (i) a platform which programmatically authors, schedules and monitors workflows, receiving data by extraction and transformation from an Events database, the platform including an advertisements inventory, and an advertisements Forecasting Inventory directed acyclic graph (DAG);
   (ii) evaluating and storing advertising indexes in a data & report engine, the advertising indexes including data ingested from the advertisements Forecasting Inventory DAG in the platform;
   (iii) a data streaming platform receiving pushed forecast events from an advertisements forecasting service;
   (iv) populating the Events database from the data streaming platform;
   (v) a portal requesting an advertisements forecast from the advertisements forecasting service;
   (vi) the advertisements forecasting service querying inventory, by querying the advertising indexes stored in the data & report engine;
   (vii) the forecasting service using the response to querying inventory to provide an advertisements forecast to the portal;
   (viii) the portal processing the received advertisements forecast to determine an advertisements campaign;
   (ix) the portal writing the determined advertisements campaign to a datalayer;
   (x) the datalayer dumping the determined advertisements campaign to a web service interface; and
   (xi) the web service interface using the dumped determined advertisements campaign to get campaign content from the platform, including from the advertisements inventory, to serve an advertisements campaign.
46. The method of Concept 45, the method including a method of any of Concepts 1 to 20, or of any of Concepts 22 to 31, or any of Concepts 33 to 43.
47. The method of Concepts 45 or 46, wherein the platform which programmatically authors, schedules and monitors workflows is, or includes, Apache Airflow.
48. The method of any of Concepts 45 to 47, wherein the advertisements are for one or more of: computing devices which use iOS, computing devices which use Android, desktop computing devices, and computing devices which use the mobile web.
49. The method of any of Concepts 45 to 48, wherein the advertisements are for one or more of: a smartphone, a tablet computer, a laptop computer, a desktop computer, a smart TV.
50. The method of any of Concepts 45 to 49, wherein the data & report engine includes an ETL and an Events database.
51. The method of Concept 50, wherein the ETL includes an Ads Inventory DAG and an Ads Forecasting Accuracy DAG.
52. The method of Concepts 50 or 51, wherein the ETL receives data by extraction and transformation from the Events database.
53. The method of any of Concepts 45 to 52, wherein the Events database includes one or more, or all, of: AdResponse, PricingSessionStarted, Ad Impression, Ad View, Ad Click and Ad Forecast data.
54. The method of any of Concepts 45 to 53, wherein the advertising indexes include one or more, or all, of data relating to: placement, tagging, User ID, Impression {0,1}, View {0,1}, and Click {0,1}.
55. The method of any of Concepts 45 to 54, wherein the forecasting service receives the response in less than one second from the querying inventory.
56. The method of any of Concepts 45 to 55, wherein the web service interface is, or includes, an S3 web service interface.
57. The method of any of Concepts 45 to 56, wherein the forecasting service pushes the forecast events to the internal data streaming platform and on to the events database.
58. The method of any of Concepts 45 to 57, wherein the forecast events are used to compare the forecast with measured advertising performance data, to evaluate the forecasting performance, and to use the measured forecasting performance to modify future forecasting, to improve the accuracy of the forecasting.
59. The method of any of Concepts 45 to 58, wherein the advertisements forecasting service is implemented in, or includes, AWS Lambda.
60. The method of any of Concepts 45 to 59, wherein the advertisements Forecasting Inventory DAG is implemented in, or includes, Apache Druid.
61. The method of any of Concepts 45 to 60, wherein the advertisements inventory data includes data extracted from a table including events logged by a Delivery Service when the Delivery Service receives a request from a frontend; placements that were requested in the Delivery Service and the (e.g flight) pricing service (FPS) session id related to the request are extracted; the latter is then used to make a join with the (e.g. Flight)SearchPricing table to extract the search criteria parameters.
62. The method of any of Concepts 45 to 61, wherein the advertisements inventory data includes data extracted from a table including the (e.g flight) searches made for specific web pages; the table contains (e.g. all) the data related to the search targeting criteria, and also the suppliers that were pinged for an itinerary for the (e.g flight) search; the table is used to extract the targeting search criteria related to an event in the table including events logged by a Delivery Service when the Delivery Service receives a request from a frontend (e.g. Searched Routes Count), and to get (e.g. all) the suppliers with an itinerary for a targeting criteria (e.g. Supplier Searched Route).
63. The method of any of Concepts 45 to 62, wherein the advertisements inventory data includes data extracted from a table including ads events (e.g. impressions, clicks, views), unified in a single entry, joined with the search data (e.g. through FPS table) related to the request made to the Delivery Service.
64. The method of any of Concepts 45 to 63, wherein the advertisements inventory data includes data extracted from a table including geo-location information.
65. The method of any of Concepts 45 to 64, wherein the advertisements inventory data is saved in a container for objects e.g. forecasting bucket, e.g. S3 bucket e.g. in Apache parquet format.
66. The method of Concept 65, wherein the advertisements inventory data saved in the container for objects is consumed by an Apache Airflow Druid operator and then ingested in an Apache Druid cluster.
67. The method of any of Concepts 45 to 66, wherein the platform reports a task failure in the DAGs in a communication channel using a reporting application.
68. The method of any of Concepts 45 to 67, wherein the platform reports any task failure in the DAGs in a communication channel using a reporting application.
69. A system configured to perform a method of any of Concepts 45 to 68.

### Note

It is to be understood that the above-referenced arrangements are only illustrative of the application for the principles of the present invention. Numerous modifications and alternative arrangements can be devised without departing from the spirit and scope of the present invention. While the present invention has been shown in the drawings and fully described above with particularity and detail in connection with what is presently deemed to be the most practical and preferred example(s) of the invention, it will be apparent to those of ordinary skill in the art that numerous modifications can be made without departing from the principles and concepts of the invention as set forth herein.

## Claims

1. A computer-implemented method of serving an advertisements campaign, the method including the steps of:
(i) a platform which programmatically authors, schedules and monitors workflows, receiving data by extraction and transformation from an Events database, the platform including an advertisements inventory, and an advertisements Forecasting Inventory directed acyclic graph (DAG);
(ii) evaluating and storing advertising indexes in a data & report engine, the advertising indexes including data ingested from the advertisements Forecasting Inventory DAG in the platform;
(iii) a data streaming platform receiving pushed forecast events from an advertisements forecasting service;
(iv) populating the Events database from the data streaming platform;
(v) a portal requesting an advertisements forecast from the advertisements forecasting service;
(vi) the advertisements forecasting service querying inventory, by querying the advertising indexes stored in the data & report engine;
(vii) the forecasting service using the response to querying inventory to provide an advertisements forecast to the portal;
(viii) the portal processing the received advertisements forecast to determine an advertisements campaign;
(ix) the portal writing the determined advertisements campaign to a datalayer;
(x) the datalayer dumping the determined advertisements campaign to a web service interface; and
(xi) the web service interface using the dumped determined advertisements campaign to get campaign content from the platform, including from the advertisements inventory, to serve an advertisements campaign.

2. The method of Claim 1, (a) wherein the platform which programmatically authors, schedules and monitors workflows is, or includes, Apache Airflow; or (b) wherein the advertisements are for one or more of: computing devices which use iOS, computing devices which use Android, desktop computing devices, and computing devices which use the mobile web; or (c) wherein the advertisements are for one or more of: a smartphone, a tablet computer, a laptop computer, a desktop computer, a smart TV.

3. The method of any of Claims 1 to 2, wherein the data & report engine includes an ETL and an Events database.

4. The method of Claim 3, (a) wherein the ETL includes an Ads Inventory DAG and an Ads Forecasting Accuracy DAG; or (b) wherein the ETL receives data by extraction and transformation from the Events database.

5. The method of any of Claims 1 to 4, (a) wherein the Events database includes one or more, or all, of: AdResponse, PricingSessionStarted, Ad Impression, Ad View, Ad Click and Ad Forecast data; or (b) wherein the advertising indexes include one or more, or all, of data relating to: placement, tagging, User ID, Impression {0,1}, View {0,1}, and Click {0,1}.

6. The method of any of Claims 1 to 5, wherein the forecasting service receives the response in less than one second from the querying inventory.

7. The method of any of Claims 1 to 6, (a) wherein the web service interface is, or includes, an S3 web service interface; or (b) wherein the forecasting service pushes the forecast events to the internal data streaming platform and on to the events database.

8. The method of any of Claims 1 to 7, (a) wherein the forecast events are used to compare the forecast with measured advertising performance data, to evaluate the forecasting performance, and to use the measured forecasting performance to modify future forecasting, to improve the accuracy of the forecasting; (b) wherein the advertisements forecasting service is implemented in, or includes, AWS Lambda; or (c) wherein the advertisements Forecasting Inventory DAG is implemented in, or includes, Apache Druid.

9. The method of any of Claims 1 to 8, wherein the advertisements inventory data includes data extracted from a table including events logged by a Delivery Service when the Delivery Service receives a request from a frontend; placements that were requested in the Delivery Service and the (e.g flight) pricing service (FPS) session id related to the request are extracted; the latter is then used to make a join with the (e.g. Flight)SearchPricing table to extract search criteria parameters.

10. The method of any of Claims 1 to 9, wherein the advertisements inventory data includes data extracted from a table including the (e.g flight) searches made for specific web pages; the table contains (e.g. all) the data related to search targeting criteria, and also the suppliers that were pinged for an itinerary for the (e.g flight) search; the table is used to extract the targeting search criteria related to an event in the table including events logged by a Delivery Service when the Delivery Service receives a request from a frontend (e.g. Searched Routes Count), and to get (e.g. all) the suppliers with an itinerary for a targeting criteria (e.g. Supplier Searched Route).

11. The method of any of Claims 1 to 10, (a) wherein the advertisements inventory data includes data extracted from a table including ads events (e.g. impressions, clicks, views), unified in a single entry, joined with the search data (e.g. through FPS table) related to the request made to the Delivery Service; or (b) wherein the advertisements inventory data includes data extracted from a table including geo-location information; or (c) wherein the advertisements inventory data is saved in a container for objects e.g. forecasting bucket, e.g. S3 bucket e.g. in Apache parquet format; or (d) wherein the advertisements inventory data is saved in a container for objects e.g. forecasting bucket, e.g. S3 bucket e.g. in Apache parquet format, and wherein the advertisements inventory data saved in the container for objects is consumed by an Apache Airflow Druid operator and then ingested in an Apache Druid cluster; or (e) wherein the platform reports a task failure in the DAGs in a communication channel using a reporting application; or (f) wherein the platform reports any task failure in the DAGs in a communication channel using a reporting application.

12. The method of any previous Claim, the method including a computer-implemented method of forecasting a number of clicks and a number of impressions a line item will receive in a defined time period, the method including the steps of:
(i) a forecasting service receiving a request from a portal for a forecast of the number of clicks and the number of impressions a line item will receive in a defined time period, the request including targeting criteria and placement data;
(ii) the forecasting service translating the targeting criteria and the placement data into an index querying syntax;
(iii) the forecasting service using the index querying syntax to request inventory via a service;
(iv) the service making a request corresponding to the index querying syntax for a time series of historical searches to a database system;
(v) in response to the request, the service receiving the time series of historical searches from the database system;
(vi) the service providing inventory to the forecasting service corresponding to the defined time period, based on the received time series of historical searches;
(vii) the forecasting service using the returned inventory in a request to a real-time service which makes a forecast of the number of clicks and the number of impressions the line item will receive in the defined time period, in which the forecasting service receives the response from the real-time service in real time, e.g. in less than one second;
(viii) the forecasting service using the received forecast of the number of clicks and the number of impressions the line item will receive in the defined time period, to derive a click-through-rate (CTR) for the line item;
(ix) the forecasting service returning the forecast of the number of clicks and the number of impressions the line item will receive in the defined time period, and the click-through-rate (CTR) in the defined time period, to the portal.

13. The method of any previous Claim, the method including a computer-implemented method of building an advertisements forecast inventory dataset and ingesting the advertisements forecast inventory dataset in a real-time analytics database cluster, the method including the steps of:
(i) an advertisements (e.g. flight) search events builder executing a builder job in a advertisements Reports directed acyclic graph (DAG) to build an advertisements (e.g. flight) search events dataset, until the builder job is complete;
(ii) an advertisements (e.g. flight) search events sensor in an advertisements Inventory DAG waiting for the builder job to complete;
(iii) an advertisements forecast inventory builder in the advertisements Inventory DAG building a forecast inventory dataset and saving the forecast inventory dataset in a format in a container for objects e.g. forecast bucket;
(iv) an advertisements forecast inventory sensor in an advertisements forecast inventory DAG waiting for the advertisements forecast inventory builder in the advertisements Inventory DAG to finish;
(v) in the advertisements forecast inventory DAG, an operator of a real-time analytics database that delivers real-time (e.g. sub-one second) answers to queries on streaming and batch data, e.g. Apache Druid, taking the inventory dataset saved in the (e.g. Apache parquet) format in the container for objects e.g. forecast bucket and ingesting the inventory dataset saved in the (e.g. Apache parquet) format, including indexing, in a real-time analytics database cluster that delivers real-time (e.g. sub-one second) answers to queries on streaming and batch data, e.g. in an Apache Druid cluster.

14. The method of any previous Claim, the method including a computer-implemented method of building and saving an advertisements forecasting accuracy report, the method including the steps of:
(i) exporting an advertisements line items forecasts history to a datalayer;
(ii) dumping line items forecasts from the advertisements line items forecasts history from the datalayer, via a webservice interface, into an advertisements line items forecast builder in an advertisements Forecasting Accuracy directed acyclic graph (DAG), and building an advertisements line items forecast;
(iii) an analytics engine for large-scale data processing in an advertisements Reports DAG receiving targeting criteria of active advertisements line items;
(iv) the analytics engine for large-scale data processing in the advertisements Reports DAG executing a job to build a report of advertisements line items performance, corresponding to a defined time period, of a number of search hits given the targeting criteria of the active advertisements line items;
(v) in response to a sensor in the advertisements Forecasting Accuracy DAG sensing the advertisements line items performance report builder in the advertisements Reports DAG has finished,
an analytics engine for large-scale data processing executing a job in the advertisements Forecasting Accuracy DAG using the report of the advertisements line items performance, the advertisements line items forecast, and the number of search hits given the targeting criteria of the active advertisements line items, to build the advertisements forecasting accuracy report and to save the advertisements forecasting accuracy report.

15. A system configured to perform a method of any of Claims 1 to 14.
